Europäisches Patentamt

**(19)** European Patent Office

Office européen des brevets

**(11)** Numéro de publication: **0 155 910**

**A2**

**(12)** # DEMANDE DE BREVET EUROPEEN

**(21)** Numéro de dépôt: **85810078.7**

**(22)** Date de dépôt: **27.02.85**

**(51)** Int. Cl.⁴: **G 01 J 3/52**

**(30)** Priorité: **01.03.84 CH 1053/84**
**27.02.85 CH 884/85**

**(43)** Date de publication de la demande:
**25.09.85 Bulletin 85/39**

**(84)** Etats contractants désignés:
**IT**

**(71)** Demandeur: **ASAVER HANDELS- UND FINANZANSTALT**
**36 Stadtle**
**FL-9490 Vaduz(LI)**

**(72)** Inventeur: **Surbeck, Jacques**
**3, rue du Léman**
**CH-1201 Geneve(CH)**

**(74)** Mandataire: **Nithardt, Roland**
**CABINET MOSER & CIE 76, Rue de Lausanne**
**CH-1202 Genève(CH)**

**(54)** Procédé et dispositif d'affichage et de codage numérique et de visualisation des couleurs par synthèse soustractive trichrome.

**(57)** Selon le dispositif, on superpose trois éléments mobiles portant chacun une serie de gradation de densité dans chacune des couleurs fondamentales soustractives, chaque gradation de densité étant assortie d'un chiffre, ou d'un symbole d'indentification.

Il devient ainsi possible de recomposer une couleur déterminée d'aprés un assemblage défini de chiffres, ou de symboles, pour autant que la source lumineuse soit de qualité constante.

Les éléments mobiles peuvent être constitués de cylindres concentriques, de disques superposés, ou de bandes sans fin circulant l'une sur l'autre sur des rouleaux, ou des planches de matière transparente portant gradation de couleurs et commandées par des glissières sous des caches.

EP 0 155 910 A2

PROCEDE ET DISPOSITIF D'AFFICHAGE ET DE CODAGE NUMERIQUE ET DE VISUALISATION DES COULEURS PAR SYNTHESE SOUSTRACTIVE TRICHROME.

La présente invention concerne un dispositif d'affichage numérique et visuel des couleurs, obtenues par synthèse soustractive trichrome par la superposition de trois films qui comportent chacun une échelle de densités colorées primaires JAUNE, MAGENTA et CYAN. Chacune des échelles de densités colorées s'exprime en N degrés de saturation progressive de la couleur primaire avec son chiffre indicateur du degré de saturation correspondant.

Il existe de nombreux systèmes de classification des couleurs, mais aucun de ceux-ci ne touche le grand public parce que ces systèmes nécessitent le recours à des catalogues nuanciers encombrants ou encore à des appareils réservés aux scientifiques, et dans ce cas ils dépassent les exigences communément admises.

Nous avons retenu, parmi les différents systèmes d'ordonnancement des couleurs celui de HICKETHIER énoncé en 1940 qui propose un catalogue de 999 tons basé sur la superposition de 9 degrés de saturation des primaires JAUNE, MAGENTA et CYAN, couleurs de référence universellement utilisées en impression comme en photographie.

Nous nous réservons, par rapport à ce chiffre de 9 degrés de saturation + le BLANC la possibilité d'étendre cette gamme à Nnuances par exemple de 0 à 20 ou de 0 à 99, ce qui donne un catalogue de 999.999 couleurs + le BLANC.

Dans le cas de 10 degrés de saturation, le degré 1 après le degré 0 qui exprime l'absence de couleur donne un pourcentage de 100/9, soit 11,11%, le degré 2 22,22%, le degré 3 33,33% etc... jusqu'au 9 qui indique 99,99% soit la saturation maximale.

Il a été affecté à chaque degré de saturation un chiffre indicateur, soit pour les trois couleurs primaires qui définissent un ton, un nombre de 3 chiffres par exemple pour 638, il a été établi de façon systématique que le premier chiffre 6 correspond au degré de saturation du JAUNE
le deuxième " 3 " " " " " " MAGENTA
le troisième " 8 " " " " " " CYAN

ainsi 638 veut dire:

| JAUNE | MAGENTA | CYAN |
|-------|---------|------|
| 6 | 3 | 8 |

La couleur 638 correspond à un vert jaune légèrement assombri par 3 unités de MAGENTA.

Le BLANC s'écrit 000 et le NOIR qui est la superposition des 3 primaires à saturation maximale s'écrit 999.

La couleur CCC signifie:

| JAUNE | MAGENTA | CYAN |
|-------|---------|------|
| 0 | 0 | 9 |

L'énoncé d'une couleur quelconque, en l'occurrence 658, permet d'obtenir instantanément le nombre indicatif de la couleur complémentaire à celle-ci, soit la différence entre ce nombre et le NOIR 959 - 658 = 361.

De plus il est possible de "calculer" ce que peut donner la combinaison de deux couleurs, puisqu'il suffit d'additionner leur nombre indicateur.

Soit 658 + 150 = 788

On peut s'étonner qu'un système aussi simple n'ait connu jusqu'à ce jour qu'un développement réservé à quelques professionnels de la couleur. C'est à notre avis parce qu'il s'agit d'un système trop abstrait, sans support concret pratique, simple et peu coûteux.

L'objet de la présente invention vise à remédier à cette carence en mettant précisément à la disposition du plus grand nombre un dispositif compact permettant l'utilisation de ce code par l'affichage, la création et la visualisation instantanée d'une gamme étendue de couleurs couvrant largement le cercle chromatique.

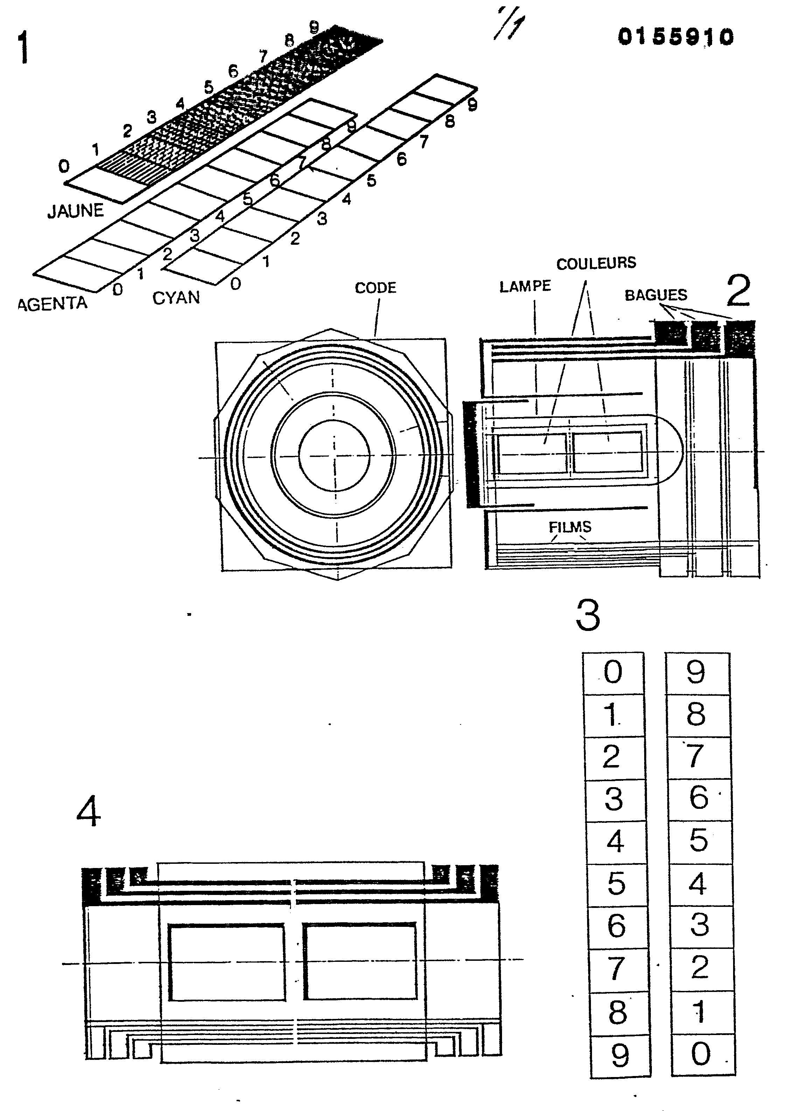

Chaque échelle de densités colorées transparentes est imprimée sur trois films de façon à former trois anneaux tournant l'un dans l'autre dont la superposition des tonalités primaires permet N combinaisons de couleurs. (fig.I) Chacun des anneaux ainsi formé se trouve logé et protégé dans un évidement aménagé à l'intérieur de trois cylindres plastiques transparents, tels que plexiglas, polystyrène, polycarbonate etc... Ces trois cylindres ainsi formés tournent l'un dans l'autre, entraînés par trois bagues, chacune placée à l'extrémité de l'un des cylindres.(fig.2)

Le pourtour de chacune des bagues est taillé de façon l'ensemble forme un décagone qui permet une manipulation plus facile ainsi que cela simplifie le positionnement et la superposition correcte des plages de densités l'une par rapport à l'autre. Ce positionnement peut être encore amélioré par l'utilisation de billes formant butée, lors de la rotation des cylindres.

Chacune des faces du décagone comporte le chiffre indicateur de la densité qui lui correspond.

Dans le dernier cylindre de plus petit diamètre se trouve une lampe qui assure au dispositif un éclairement indépendant de la lumière ambiante ainsi qu'une température de couleur constante.Une plage de blanc encercle la plage colorée visible dans une fenêtre et sert de référence à la couleur affichée.

Dans la version exposée de la figure 2 et, afin de limiter les problèmes d'échauffement risquant d'entraver la rotation des cylindres et autres inconvénients, on a prévu une lampe néon à allumage instantané se branchant
directement sur le secteur, de longue durée, 6 à 10.000 heures.
D'autres dispositifs avec piles ou accus rechargeables peuvent libérer de
la contrainte d'une alimentation secteur.

Un modèle haut de gamme peut comporter un dispositif électronique qui assure
une constante d'éclairement en dépit du vieillissement de la lampe par incorporation d'une résistance variable pilotée par un comparateur qui établit à chaque instant l'équivalence de brillance de la source et une valeur
électrique de référence stable.

La figure 2 montre l'ensemble du dispositif avec les cylindres tournant à
l'intérieur d'un cube opaque, par exemple noir ou fumé, celà pour des raisons
d'esthétique et de maniabilité.

On distingue deux fenêtres sur la figure 2, l'une permet de voir la teinte
affichée, l'autre sa couleur complémentaire.

La vision des deux couleurs peut être obtenue, lors de l'impression des films
support de densités colorées en imprimant côte à côte deux plages de densité
de telle façon que leur somme soit toujours égales à la densité maximale.
Ainsi, dans le cas d'un système décimal d'affichage, la somme des chiffres indicateurs pour chaque plage sera 9 ainsi que celà figure en 3. On remarque
que la succession des chiffres indicateurs s'inverse d'une colonne à l'autre.
Le chiffre indicateur de la couleur complémentaire peut être gravé à côté du
chiffre de la couleur affichée sur chacune des faces extérieures des bagues,
mais en caractère plus petit et dans une autre couleur afin d'éviter toute
confusion. Le chiffre indicateur de la complémentaire peut aussi figurer dans
le cadre blanc entourant les plages de densités.

Cet appareil peut servir d'outil d'initiation à l'enseignement des couleurs
et à la colorimétrie, mais surtout d'instrument de recherches d'harmonies    .
colorées pour de multiples applications professionnelles.

Lors de l'impression des échelles de densités, il est possible de juxtaposer
côte à côte N valeurs de densités colorées, de telle façon que leur superposition fasse apparaître simultanément la teinte affichée et une gamme d'harmoniques de la couleur-mère.

Ainsi 638 donne les combinaisons suivantes:

teinte affichée  complémentaire                harmoniques

Y M C                   Y M C          Y M C   Y M C   Y M C   Y M C   Y M C
6 3 8                   3 6 I          6 8 3   3 8 6   3 6 8   8 6 3   8 3 6

Ces couleurs harmoniques s'obtiennent par la permutation des chiffres indicateurs de la couleur-mère.

Ce principe peut s'appliquer de façon particulièrement appropriée au manche d'un crayon, d'un pinceau ou d'un stylo. Le remplacement de la lampe éclairant par transparence la superposition des plages de densités colorées peut être obtenu par dépôt d'un film métallisé formant miroir et réfléchissant à travers les couches colorées la lumière ambiante. On comprendra que ce dépôt s'effectue sous la dernière plage colorée.

Une variante de l'invention consiste la possibilité d'associer visuellement et simultanément N couleurs que l'on peut moduler de façon indépendante en juxtaposant N ensembles-cylindres tel que cela est indiqué en figure 4 pour 2 d'entre eux.

L'un des cylindres permet d'afficher la teinte mère, pendant que l'on peut moduler et afficher simultanément toutes couleurs, indépendamment de la couleur mère, tout en mémorisant leurs chiffres indicateurs, pour reproduire les harmonies retenues.

L'utilisation d'un tel dispositif concerne toutes les professions et activités qui se servent de couleurs: les techniques d'imprimerie et d'impressions sous toutes formes, les activités de création telles que graphisme, publicité, décoration, mode, architecture, peinture, teinturerie, tissage, tapisserie carosserie etc... sans oublier les établissements d'enseignement technique et artistique et l'utilisation domestique où la ménagère peut "calculer" des assortiments de vêtements, tentures, façades murales etc...

Il est notoire que toute initiation à une technique s'assimile d'autant plus facilement qu'elle est motivante, particulièrement lorsqu'elle est présentée sous forme de jeu, ce que nous présentons dans une variante de l'invention.

Dans la version à deux cylindres générateurs de couleurs, le jeu consiste à reconstituer par approximations successives une couleur obtenue par la mise en rotation aléatoire des trois cylindres support de gradations.

Dans la figure 4 on peut imaginer la rotation aléatoire des cylindres de la partie gauche du dessin peut être amorcée par un dispositif à crémaillère débrayable ou une vis sans fin, à la façon d'une roulette de jeux.

La crémaillère entraîne chacun des cylindres par l'intermédiaire des bagues comportant une denture à la place des pans coupés. Un cliquet bloque alors le cylindre de façon à présenter les densités colorées dans l'axe de la fenêtre de scrutation. A l'arrêt des cylindres, une couleur apparaît au hasard, mais les chiffres indicateurs sont masqués par un clapet mobile dont le basculement peut permettre leur lecture, en fin de séquence.

C'est à l'aide des bagues fixées sur l'autre cylindre, en l'occurrence celui de droite, que l'on essaye de reconstituer la couleur aléatoire.

L'écart obtenu entre la couleur aléatoire et la couleur recomposée pénalise le joueur d'autant de points portés à son débit tandis que chaque recomposition correcte le crédite d'autant de points portés par les chiffres indicateurs de la couleur aléatoire.

On peut jouer à plusieurs et un nombre de parties convenues d'avance.

Le gagnant est le joueur ayant le plus de points à son crédit.

Ce dispositif fait appel à la synthèse soustractive pour générer des couleurs, mais il est évident que l'on peut utiliser de la même façon la synthèse additive des couleurs et dans ce cas les couleurs primaires soustractives sont remplacées par les couleurs primaires additives ce qui donne:

| JAUNE | MAGENTA | CYAN |
|-------|---------|------|
| BLEU | VERT | ROUGE |

On se sert des possibilités et de la souplesse qu'offrent les techniques de l'électroniques et de l'informatique qui permettent de supprimer toute mécanique.

Les couleurs sont générées par trois sources lumineuses que l'on peut moduler en intensité sur N niveaux d'éclairement étalés de 0 à N.

Les faisceaux issus de ces sources sont colorés par l'intermédiaire de trois filtres, respectivement BLEU VERT et ROUGE.

La synthèse des trois faisceaux assurant le mélange des lumières colorées s'obtient par un système à miroirs dichroïques, ou par convergeance des faisceaux. La couleur en résultant apparaît sur un écran dépoli alors que les chiffres indicateurs sont portés sur un afficheur à diodes électroluminescentes ou à cristaux liquides.

La génération des couleurs se fait par l'intermédiaire d'un clavier numérique commandant des régulateurs de tension monolithiques qui régulent l'alimentation des sources lumineuses.

Au lieu de comporter deux fenêtres d'affichage où apparaissent simultanément la couleur aléatoire et celle qu'il s'agit de recomposer, on peut imaginer une seule fenêtre dans laquelle apparaît une couleur générée par un dispositif électronique aléatoire.

On dispose d'un temps de scrutation prédéterminé et c'est ensuite de mémoire qu'il faut recomposer la teinte, sur l'écran rendu disponible.

Les opérations comptables peuvent être mémorisées par une calculette incorporée associée à une mémoire qui fait les comptes des différents partenaires.

## REVENDICATIONS

1. Dispositif de synthèse trichrome soustractive des couleurs qui permet d'obtenir sous un faible encombrement, et instantanément, une gamme de N.. couleurs référencées, numériquement basé sur la théorie des couleurs de HICKETIER, théorie qui démontre qu'une couleur X.. peut être définie par ses trois composantes primaires soustractives JAUNE, MAGENTA et CYAN placées dans l'ordre, et que chacune d'elles divisée en une échelle de 10 degrés d'intensité commençant par O et finissant par 9 permet par superposition avec les deux autres un engrenage mutuel de 999 couleurs allant du blanc au noir.

2. Dispositif caractérisé par le fait que chacune des composantes primaires soustractives, JAUNE, MAGENTA et CYAN, exprimées en 10 degrés d'intensité est transposée sur un film transparent incolore mis en boucle, et se trouve accompagnée d'un chiffre indiquant son degré de saturation, compris entre O et 9 et placé de telle sorte que la superposition des trois films fasse apparaître par transparence et simultanément la couleur composite en résultant, ainsi que le nombre qui indique les proportions respectives des composantes primaires JAUNE, MAGENTA et CYAN (fig.2).

3. Dispositif caractérisé par la juxtaposition, parallèlement à chaque échelle de densités colorées, d'une échelle de densités inversement proportionnelles dont la superposition fasse apparaître simultanément la couleur affichée, la couleur complémentaire ainsi que leur nombre code respectif (fig.3).

4. Dispositif selon les revendications 2 et 3 caractérisé par l'emboîtement de 3 cylindres réalisés dans un matériau transparent comme par exemple: verre, plexiglas, polycarbonate, etc.. ou dans un matériau opaque mais portant des ouvertures aux endroits adéquats permettant de superposer les différentes gradations de couleurs. Ces cylindres comporteront chacun un évidement dans l'épaisseur de leur paroi, destiné à recevoir leur film respectif

./.

supportant les échelles de densités colorées JAUNE, MAGENTA et CYAN, ces trois cylindres étant entraînés de façon indépendante par trois bagues crantées, de telle façon que leur rotation respective permette la superposition de toutes les combinaisons colorées des densités imprimées sur chacun des films (fig.2).

5. Dispositif selon les revendications précédentes caractérisé par les bagues d'entraînement des trois cylindres qui comportent sur leur face externe N à-plat où se trouvent imprimés les chiffres indicateurs de la couleur affichée et de sa complémentaire imprimée en densité sur le film correspondant, ce qui pour une échelle de 10 densités forme un décagone et permet de visualiser 999 couleurs plus le blanc 000, couleurs éclairées de façon indépendante de la lumière extérieure par une lampe placée dans l'axe du cylindre de plus petit diamètre (fig.2).

6. Variante du dispositif de la revendication 5, caractérisé par le remplacement des trois cylindres support d'échelles de densités colorées, par trois disques support transparents où les densités colorées sont placées à la périphérie.

7. Variante selon les revendications précédentes, caractérisée par la juxtaposition de N.. ensembles-cylindres qui peuvent être disposés bout à bout ou de toute autre manière de façon à permettre la visualisation simultanée de la couleur affichée avec son code, et de N.. couleurs composées indépendamment de la première, ce qui permet des recherches d'harmonies colorées rapides, précises et reproductibles, grâce au code (fig. 4).

8. Dans un but à la fois didactique et ludique, variant de réalisation selon les revendications précédentes sous forme d'un jeu comprenant deux jeux de cylindres afficheurs juxtaposés dont l'un des mécanismes comporte un système d'entraînement, par exemple trois roues dentées entraînées par une crémaillère, ou tout autre dispositif d'entraînement des cylindres permettant la mise en rotation aléatoire de ceux-ci, de façon à composer une couleur

./.

au hasard, par superposition aléatoire d'une gradation de densité de chacune des boucles des trois couleurs primaires JAUNE, MAGENTA et CYAN, placées sur les cylindres.

9. Variante de la réalisation selon la revendication 8. caractérisée en ce que le jeu consiste à reproduire par approximations successives et le plus fidèlement possible, la couleur générée de façon aléatoire à l'aide de l'afficheur à commande par bagues, en essayant de retrouver les densités de chacune des couleurs fondamentales JAUNE, MAGENTA et CYAN, qui permettront de retrouver la couleur affichée par le mécanisme de détermination aléatoire dont le code, masqué par le clapet mobile, n'est révélé qu'en fin de chaque exercice, le but étant de limiter au maximum l'écart entre le chiffre du code de la couleur aléatoire, et celui du code de la couleur reconstituée par le joueur.

10. Le jeu exposé selon les revendications 8 et 9 peut se dérouler en N.. parties et N.. participants, les écarts entre les chiffres du code de la couleur déterminée de manière aléatoire, et ceux du code de la teinte recomposée visuellement par le joueur peuvent être additionnés pour chacune des 3 couleurs fondamentales, JAUNE, MAGENTA et CYAN, ce qui permet en plus de déterminer les éventuelles faiblesses de l'oeil à une couleur déterminée, ou des yeux de chacun des joueurs, alors que les coups au cours desquels le joueur aura réussi à recomposer la couleur exacte, analogue à celle de la couleur obtenue de façon aléatoire ne donnera lieu à aucun point de pénalité, et pourrait même soustraire des points de pénalité, selon convention de jeu à établir entre les participants.

11 .- Dispositif de synthèse trichrome soustractive des couleurs qui permet de composer, sous un faible encombrement, et instantanément une gamme de couleurs égale au nombre de nuances portées par chaque élément mobile à la puissance trois, moins une. Les éléments mobiles peuvent être des cylindres concentriques transparents ou portant des ouvertures superposables, des disques superposés, soit transparents, soit portant des ouvertures superposables, des bandes sans fin commandées par des rouleaux co-axiaux, ou des planches superposables commandées de toute autre façon.

12 .- Dispositif de synthèse trichrome soustractive des couleurs dont les éléments mobiles sont placés de telle manière qu'une source lumineuse de longueur d'onde et de température de couleur déterminée puisse donner toujours la même couleur lors de superposition de 3 gradation de couleur analogue.

13 .- Dispositif de synthèse trichrome soustractive dont les éléments colorés, en gradation d'intensité régulière peuvent être identifiés par un chiffre ou un symbole déterminé permettant ainsi d'en associer l'assemblage à une couleur précise qui pourra être ainsi définie par cet assemblage de chiffres ou de symboles.

14 .- Dispositif de synthèse trichrome soustractive dont la fenêtre éclairée pourra être surmontée d'une lentille multifaces permettant de multiplier l'image de la pastille de couleur, ou d'un tube à pans multiples réfléchissant, du modèle d'un kaleïdoscope, pour obtenir une image plus lumineuse et homogène de la couleur.

15.- dispositif de sythèse trichrome soustractive dont les 3 disques seront réunis en leur point central par un axe sur lequel ils pourront pivoter, tout en étant bloqués entre eux par un procédé mécanique classique de cliquet ou de bille + ressort.

0155910

16.- Dispositif de sythese trichrome soustractive caractérisé par le fait que l'un des disques externes portera un élément mécanique permettant de l'adapter sur un objectif d'appareil photographique, alors que l'autre disque externe pourrait porter un parasoleil, ou un élément permettant d'en adapter un.

17.- Dispositif de synthèse trichrome soustractive caractérisé par le fait que les disques, cylindres, bandes, ou planches mobiles pourront porter des éléments de gradation des 3 couleurs fondamentales soustractives dans différentes intensités de brillance.

18.- Dispositif de synthèse trichrome soustractive caractérisé par le fait que la même source lumineuse pourra éclairer un témoin d'une couleur à identifier et les éléments colorés des pièces mobiles (disques, cylindres, bandes ou planches) de manière à permettre à l'oeil de l'opérateur de pouvoir comparer et apprécier ces couleurs (soit par jeu de miroirs, soit par fibres optiques, soit par tout autre moyen de transmission de la couleur témoin à l'appareil d'identification, ou de l'appareil d'identification à la couleur témoin).

19.- Dispositif de synthèse trichrome soustractive caractérisé par le fait que le positionnement des éléments mobiles est animé d'un mouvement aléatoire, et dont les symboles ne peuvent être vus de l'opérateur, ce qui permet de l'adapter au jeu de hasard, le joueur ayant à découvrir la composition d'une couleur, et/ou la reconstituer.

20.- Dispositif de synthèse trichrome soustractive caractérisé en ce que le jeu décrit en revendication 9 pourra être utilisé dans un appareil professionnel de jeu, le joueur recevant "X" fois sa mise en fonction de l'exactitude de la reconstitution de la couleur proposée par la machine ou du nombre de couleurs qu'il aura choisi et parmi lesquelles il aura à reconnaitre, interpréter et recomposer celle que lui proposera la machine.

0155910

**1**

JAUNE

AGENTA   CYAN

0 1 2 3 4 5 6 7 8 9

CODE

**2**

LAMPE   COULEURS   BAGUES

FILMS

**3**

| 0 | 9 |
|---|---|
| 1 | 8 |
| 2 | 7 |
| 3 | 6 |
| 4 | 5 |
| 5 | 4 |
| 6 | 3 |
| 7 | 2 |
| 8 | 1 |
| 9 | 0 |

**4**